(19) **Europäisches Patentamt / European Patent Office / Office européen des brevets**

(11) **EP 1 908 016 B1**

(12) **EUROPEAN PATENT SPECIFICATION**

(45) Date of publication and mention of the grant of the patent:
**23.06.2010 Bulletin 2010/25**

(21) Application number: **07789499.6**

(22) Date of filing: **20.07.2007**

(51) Int Cl.:
$G06T\ 7/20^{(2006.01)}$

(86) International application number:
**PCT/IB2007/002050**

(87) International publication number:
**WO 2008/012631 (31.01.2008 Gazette 2008/05)**

(54) **EVENT DETECTION METHOD AND VIDEO SURVEILLANCE SYSTEM USING SAID METHOD**

VERFAHREN ZUR EREIGNISERKENNUNG UND VIDEOÜBERWACHUNGSSYSTEM MIT DIESEM VERFAHREN

PROCEDE DE DETECTION D'EVENEMENTS ET SYSTEME DE SURVEILLANCE VIDEO UTILISANT LEDIT PROCEDE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.07.2006 IT TO20060556**

(43) Date of publication of application:
**09.04.2008 Bulletin 2008/15**

(73) Proprietor: **VIDEOTEC S.P.A.**
**Schio (Vicenza) (IT)**

(72) Inventors:
• **GENNARI, Giambattista**
  36015 Schio (VI) (IT)
• **RACCANELLI, Giorgio**
  36015 Schio (VI) (IT)
• **FREZZA, Ruggero**
  35131 Padova (IT)
• **CENEDESE, Angelo**
  35131 Padova (IT)
• **CAMPANA, Enrico**
  36016 Thiene (VI) (IT)

(74) Representative: **Dini, Roberto**
**Metroconsult S.r.l.**
**Via Sestriere 100**
**10060 None (TO) (IT)**

(56) References cited:
**EP-A- 1 542 154**

• YANWEI PANG ET AL: "Face Recognition Using Neighborhood Preserving Projections" ADVANCES IN MULITMEDIA INFORMATION PROCESSING - PCM 2005 LECTURE NOTES IN COMPUTER SCIENCE;;LNCS, SPRINGER-VERLAG, BE, vol. 3768, 2005, pages 854-864, XP019024109 ISBN: 3-540-30040-6
• HUAZHONG NING ET AL: "Silhouette analysis-based gait recognition for human identification" IEEE TRANSACTIONS ON PATTERN ANALYSIS AND MACHINE INTELLIGENCE, IEEE, NEW YORK, NY, US, vol. 25, no. 12, December 2003 (2003-12), pages 1505-1518, XP011103919 ISSN: 0162-8828
• WEI FAN ET AL: "Locally Linear Models on Face Appearance Manifolds with Application to Dual-Subspace Based Classification" COMPUTER VISION AND PATTERN RECOGNITION, 2006 IEEE COMPUTER SOCIETY CONFERENCE ON NEW YORK, NY, USA 17-22 JUNE 2006, PISCATAWAY, NJ, USA,IEEE, 17 June 2006 (2006-06-17), pages 1384-1390, XP010923196 ISBN: 0-7695-2597-0

## Description

<u>Field of invention</u>

The present invention relates to an event detection method according to the preamble of claim 1 and to a video surveillance system using said method.

<u>Description of the prior art</u>

In the present patent, the term "video surveillance system" refers to a surveillance system using at least one image acquisition unit and being capable of acquiring sequences of images of a supervised area.
Generally, known video surveillance systems include event detection systems which can generate alarms when an anomalous event takes place.
Some known systems only detect variations (beyond a certain user-defined threshold) in the brightness of the pixels of two successive images, such as two frames of a video signal or two images taken by a camera at different times.
These systems suffer from the drawback that sudden light variations due, for example, to travelling clouds or reflections on water, or natural movements within the supervised area (e.g. the branches of a tree moved by the wind or authorized cars driven down a street) may cause several false alarms.
For overcoming these drawbacks, video surveillance systems are known which comprise a learning phase wherein the system builds a model of the supervised area in a normal situation, i.e. a situation wherein no alarm should be triggered. During the operating phase, the pixels of the taken image are compared with the pixels of the model. If the difference in the pixels is beyond a certain operator-defined threshold, an alarm will be triggered.
Notwithstanding the creation of a model pertaining to a normal situation of the supervised area, the effectiveness of a pixel-by-pixel comparison between the acquired image and the model is often poor because a single pixel differing from its model is sufficient to trigger an alarm.
This leads to the generation of a lot of false alarms.
The problem of the generation of false alarms has been addressed by some known solutions (American patent US 5,892,856), which de facto subtract from the detection those pixels that show intensity variations (e.g. due to natural movements in the watched scene) during the learning phase.
Such a solution, which is not very effective, can only be used in selected contexts such as presence detection at workstations (as in patent US 5,892,856).
Other more advanced solutions, such as the one disclosed by patent application US 2004/0246336, provide in primis for the creation of a statistic model for each pixel (with related average and variance); subsequently, during the event detection phase, the system extrapolates the image of the detected object/person in order to compare it with a set of models of authorized objects.
However, this solution has the drawback that it requires much available memory for storing the models of the scene and of the authorized objects, as well as high computing power for analyzing the whole image in real time by comparing the detected objects with the authorized ones.
European Patent EP1542154 and the scientific article "Face Recognition Using Neighbourhood Preserving Projections" by YANWEI PANG et al. (published on ADVANCES IN MULTIMEDIA INFORMATION PROCESSING - PCM 2005 LECTURE NOTES IN COMPUTER SCIENCE (LNCS, SPRINGER-VERLANG, Berlin, vol. 3768,2005) disclose face recognition algorithms and further relate to scene change detection in the context of surveillance systems.
EP1542154 discloses that event detection can be made by comparing a image with a model of facial and non facial features and that in the training phase, an analysis process is applied to a set of images known to contain faces, and (optionally) another set of images ("nonface images") known not to contain faces.
The scientific article "Silhouette analysis-based gait recognition for human identification" by HUAZHONG NING ET AL, (published on IEEE TRANSACTIONS ON PATTERN ANALYSYS AND MACHINE INTELLIGENCE, IEEE, NEW YORK ny, us, vol. 25,no.12, December 2003, pages 1505-1518) discloses a system for identifying a person based on the way they walk and require a learning phase wherein models of the persons to be identified are created.
The scientific article "Locally Linear Models on Face Appearance Manifolds with Application to Dual-Subspace Based Classification" (published on IEEE COMPUTER SOCIETY CONFERENCE ON COMPUTER VISION AND PATTERN RECOGNITION, 2006, NEW YORK, NY, US, 17-22 June 2006, pages 1384-1390) discloses a method for face recognition which requires a learning set of face images.
A problem which is common to all known solutions is due to the fact that the alarm is triggered when the brightness or colour difference of a pixel in two consecutive frames is beyond a certain operator-defined threshold. This results in the efficiency of the system being dependent on the operator's skill, this being a problem if the operator is not an expert.
The main object of the present invention is to overcome the drawbacks of the prior art, and in particular to provide a video surveillance system and an event detection method which allow for a more effective detection of events while reducing the number of false alarms and preferably while not requiring high capacity in terms of available memory and computing power.

It is a further object of the present invention to provide a system having a high degree of automation and being capable of calculating automatically the error threshold beyond which a normal variation of one pixel must be discriminated from an alarm condition.

The present invention also aims at providing a video surveillance system and an event detection method capable of optimizing memory usage and of varying the computing complexity depending on the dynamics being present in the supervised area during the learning phase.

These and further objects of the present invention are achieved through a video surveillance system and method according to the appended claims, which are intended as an integral part of the present description.

Brief description of the invention

The present invention is based on the idea of leaving the traditional approach according to which every single pixel of a current image is compared with a respective pixel of a reference image or with a pixel model.

In particular, the invention aims at taking into consideration regions of the image, i.e. groups of pixels, in order to take also into account the correlation among the pixels when detecting an event, thus reducing the number of false alarms.

The video surveillance system according to the invention acquires images of a supervised area and compares single regions thereof with respective "models" representing a normal situation, which are built in the form of a space of images acquired during a learning phase, said images relating to a normal situation of the watched scene.

The image or region is treated like an image vector, the difference of which from a normal situation is measured as a projection error of the image vector on a space of images representing the "model" of the supervised area in a normal situation.

The "model" is built by starting from a set of images acquired during a learning phase by shooting the area in a normal situation.

The learning phase may include a model validation phase substantially consisting in a simulation of an operating detection phase. The validation phase uses images of the scene in a normal situation acquired during the learning phase, and checks whether the model just built is good or not.

For detecting events, the method according to the invention exploits in particular the properties of principal components analysis (PCA).

Advantageously, the method also provides for a suitable reduction of the informative content of the acquired images, thus ignoring minor phenomena occurring in a scene and reducing the number of false alarms.

Brief description of the drawings

Further objects and advantages of the present invention will become apparent from the following description and from the annexed drawings, wherein:

- Fig. 1 shows a video surveillance system according to an embodiment of the invention;
- Fig. 2 is a block diagram of the processing applied to the acquired images by a video surveillance system according to the invention;
- Fig. 3 shows an acquired image broken down into a plurality of regions.
- Fig. 4 shows an example of event detection.

Detailed description of the invention

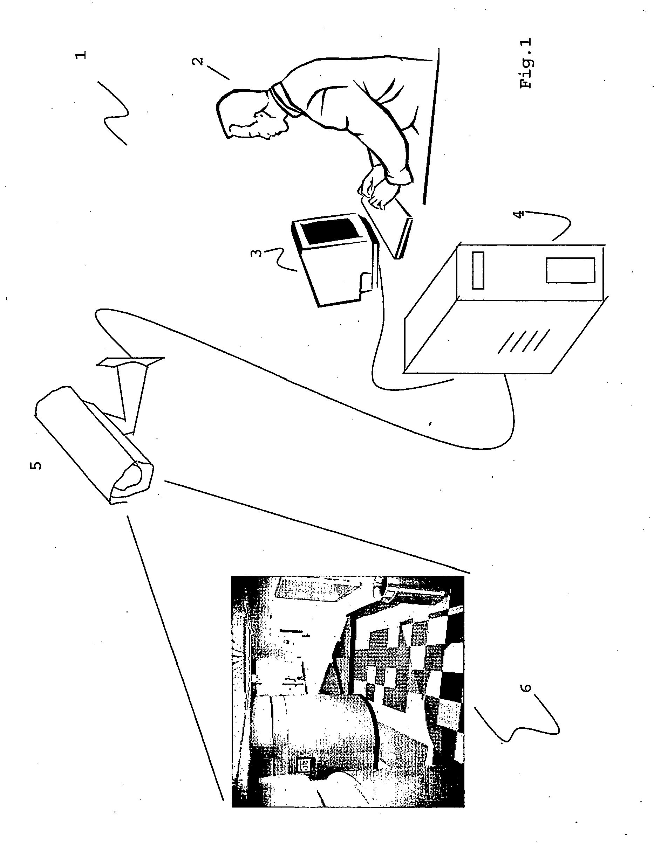

Fig. 1 shows a video surveillance system 1. Through a monitor 3, an operator 2 watches the images 6 acquired by an image acquisition unit 5.

In Fig. 1, the image acquisition unit is a video camera capable of providing an output video, i.e. a continuous sequence of images, but it is understood that, for the purposes of the invention, it may be replaced with any other equivalent means, e.g. a programmed digital camera acquiring images at regular time intervals.

An image may thus correspond to a frame or a half-frame of a video signal acquired by the video camera, to a static image acquired by a digital camera, to the output of a CCD sensor, or more in general to a portion of the above.

As well known, a digital or analog image can be disassembled into pixels, i.e. fundamental elements of the image.

One or several matrixes may therefore be associated with each image, the elements of which are the voltage values of the analog video signal or the brightness or colour values of the pixels.

When a colour video camera is used, the acquired image will correspond to a tridimensional matrix wherein each matrix element (i.e. each pixel) corresponds to a triplet of values corresponding to the values of the RGB signals.

In a greyscale image, each matrix element is associated with a value corresponding to the grey value of the corresponding pixel.

In the present description this image-matrix association will be implicit, so that reference will be made below, for example, to rows and columns of an image.

Back to Fig. 1, the video camera 5 shoots an area, in this specific case a corridor, and transmits a video signal which can be displayed on the monitor 3.

According to the invention, the surveillance system 1 includes an image processing unit 4 capable of detecting events starting from the images acquired by the video camera 5.

In Fig. 1, the image processing unit 4 is represented by an electronic computer connected to the video camera 5 and to the monitor 3 in order to receive and process the video signal sent by the video camera and to display images on the monitor.

In a preferred embodiment, the image processing unit 4 is a video server, i.e. a numerical computer receiving a video signal from the image acquisition unit, processing it according to the method of the present invention, and transferring a video signal to one or several terminals connected thereto, said terminal being in particular an operator's workstation.

Of course, many other solutions are possible as well, e.g. the image processing unit 4 may be incorporated in the video camera 5 (which in such a case will comprise an image acquisition unit and an image processing unit), which will be connected to the monitor 3 either directly or through a video switch.

The image processing unit 4 is provided with software containing code portions capable of implementing the event detection method described below. According to said method, a learning phase is executed at least once at installation time, wherein the system builds a "model" of the watched scene in a normal situation.

Nevertheless, according to said method the learning phase may advantageously be repeated several times under different environmental conditions (light, traffic, etc.). This allows to build one or several models.

For example, several models may be built at different times of the day, in which case an image acquired at a certain time shall be compared with the valid model for that time.

In a normal situation, i.e. in the absence of any detectable events, the operator 2 starts the software learning phase, wherein images of the supervised area are acquired which will be hereafter referred to as "learning images".

In the preferred embodiment described below, the acquired images correspond to the frames of the video signal generated by the video camera 5.

During this phase, it is possible that moving objects are taken, such as leaves of trees or vehicles travelling down a street behind the scene, so that the acquired images may differ from one another.

Consequently, the model can represent the watched scene in a dynamic situation, without any events to be detected.

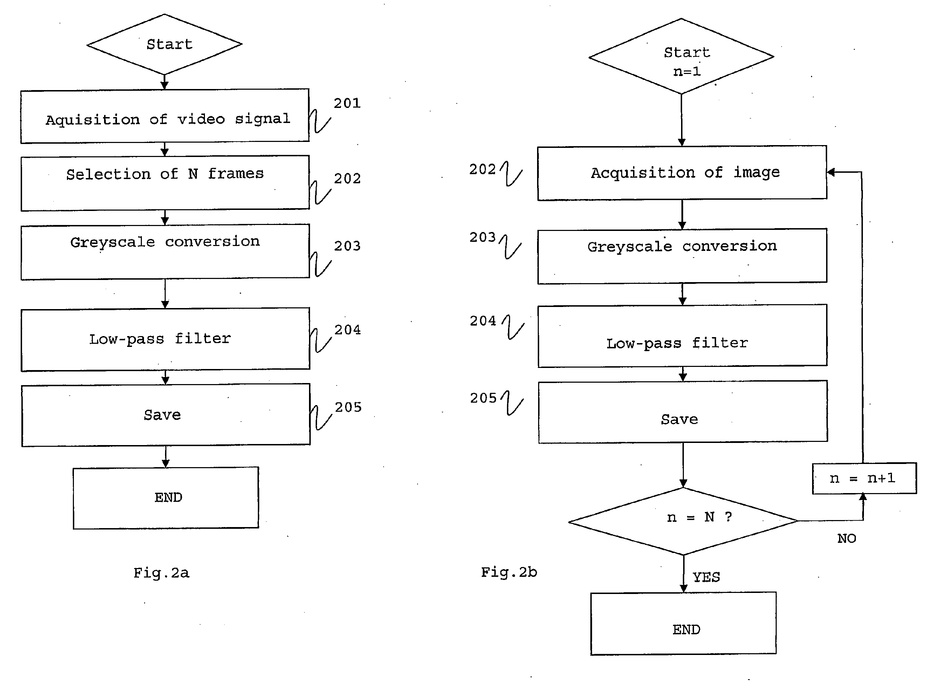

As shown in Fig. 2a, the first step of the learning phase of the event detection method consists in the selection (202) of a set of N frames $F_1, ... , F_N$ starting from the video signal 201 acquired by the video camera. Preferably, these frames are subjected to image processing operations such as a greyscale conversion (203) in order to reduce the size of the data to be treated, and possibly, additionally or alternatively, a low-pass filtering (204) with a Gaussian kernel in order to eliminate and smooth any high-frequency variations not to be detected, thus reducing the informative content of the images to be treated and focusing the detection on the interesting informative content of the image.

The frames thus modified are then inserted into a learning buffer (205).

As an alternative, the above image processing steps may be repeated cyclically on each acquired frame, as shown in Fig. 2b. In this case, the parameter n is set initially to 1 and an image is acquired (202b), which is then converted to greyscale (203b), filtered with a low-pass filter (204c) and stored in the buffer (205c). Subsequently, the value of n is incremented and these steps are repeated until N images are stored in the buffer.

Once created, the content of the learning buffer is subdivided into two parts: a first group of frames, called "training frames", on which a principal components analysis (PCA) is carried out, and a second group of frames, called "validation frames", used for validating the results obtained from the PCA.

Therefore, the learning phase correspondingly comprises a training phase and a validation phase.

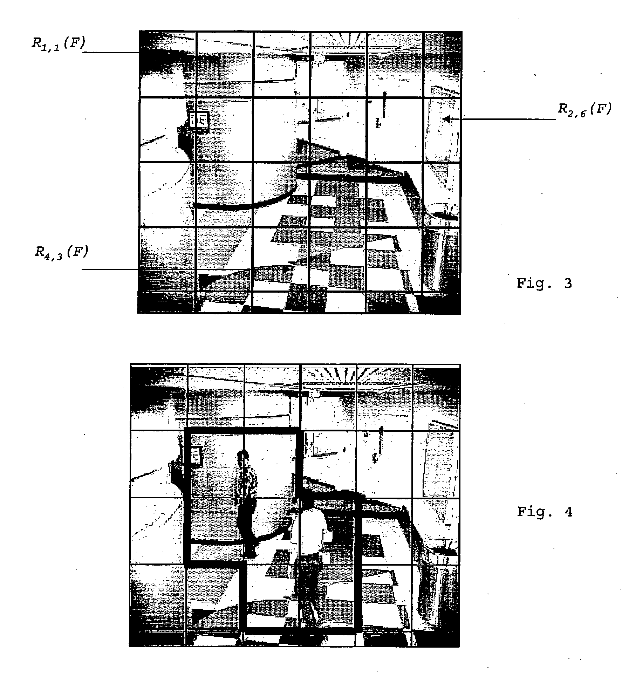

According to a preferred embodiment, during the training phase each one of the training frames $F_n$ (the number of which is S in this example), and preferably each one of the frames stored in the learning buffer, is subdivided by means of a predefined grid into regions (i.e. small images preferably square or rectangular in shape) $R_{i,j}$ having max. $M \times M = m$ pixels. The result, as shown in Fig. 3, is a plurality of portions of images obtained from each frame. The size of the grid depends on the typical dimensions of the target to be discovered in the watched scene.

Said grid may then be set up by an installer at installation time depending on the shooting perspective and on the operator's needs, or else be predefined at the factory.

For each region $R_{i,j}$ of a frame Fn, a corresponding column vector $IR_{i,j}(Fn)$ is obtained.

This vector $IR_{i,j}(Fn)$ is substantially obtained by progressively entering the elements of the matrix $R_{i,j}$ (i.e. the values of the pixels of the region), which meet together when scrolling the columns from the top and from the left. Thus, the element $IR_{i,j}(Fn)(2)$ corresponds to the pixel located on the second row of the first column of the image $R_{i,j}$.

By placing the column vectors of a same region $R_{i,j}$ side by side, a corresponding normality matrix $Y_{i,j} = (IR_{i,j}(F_1), IR_{i,j}(F_2),...,IR_{i,j}(F_S))$ is created.

The columns of the normality matrix generate a vectorial space of the images.

The columns carry the information relating to one region of the watched scene at different instants and in a normal situation, whereas the autovectors of the respective co-variance matrix are the principal components thereof, i.e. the directions in which the variance of the columns of $Y_{i,j}$, i.e. of the collected images, is greater.

Once the matrix $Y_{i,j}$ has been obtained, a singular value decomposition (SVD) is carried out in order to obtain three matrixes $U_{i,j}$, $V_{i,j}$, $\Sigma_{i,j}$ such that

$$Y_{i,j} = U_{i,j} \cdot \Sigma_{i,j} \cdot V_{i,j}^T$$

with

$$U_{i,j} = [u_1 \ldots u_S]$$

$$\Sigma_{i,j} = \text{diag}(\sigma_1, \ldots, \sigma_S)$$

$$V_{i,j} = [v_1 \ldots v_S]$$

wherein $u_i$ (vectors $\in \Re^m$) are the autovectors o the co-variance matrix of $Y_{i,j}$, and $\sigma_1, \ldots, \sigma_S$ are the singular values of $Y_{i,j}$.

As known, when using an SVD decomposition the elements of the diagonal matrix $\Sigma_{i,j}$ are bound by the following relationship:

$$\sigma_1 \geq \ldots \geq \sigma_r \geq \sigma_{r+1} \geq \ldots \sigma_S \geq 0$$

According to the invention, in order to optimize the detection of events and to focus on the relevant informative content of the image, the matrix $Y_{i,j}$ is approximated by the matrix

$$Y_{i,j}^r = U_{i,j}^r \cdot \Sigma_{i,j}^r \cdot \left(V_{i,j}^r\right)^T$$

wherein

$$U_{i,j}^r = [u_1 \ldots u_r]$$

$$\Sigma_{i,j}^r = \text{diag}(\sigma_1 \ldots \sigma_r)$$

$$V_{i,j}^r = [v_1 \ldots v_r]$$

and wherein the number of singular values r taken into consideration for building $Y_{i,j}^{r}$ is obtained by ignoring all singular values below a certain threshold.

The matrix $Y_{i,j}^{r}$ has the same dimensions as the matrix $Y_{i,j}$, but it only carries the information relating to the first r principal components of the matrix $Y_{i,j}$.

The columns $u_1 \ldots u_r$ of the matrix $U_{i,j}^{r}$ are the principal components of the matrix $Y_{i,j}$.

To determine the threshold, several tests have been carried out which have shown that a good event detection can be achieved when the informative content of $Y_{i,j}$ is approximated by giving up 20%-30%, preferably 25%, of the energy of $Y_{i,j}$ (i.e. of the image portions $R_{i,j}$ used for building this matrix).

Due to a known property related to singular values, the percentage of energy %E(r) bound to the first r principal components of the matrix $Y_{i,j}$ (with S singular values) is:

$$\%E(r) = \frac{\sum_{k=1} \sigma_k}{\sum_{k=1}^{S} \sigma_k}$$

Starting from these considerations, for each region $R_{i,j}$ a respective value of r is determined and the matrix $Y_{i,j}^{r}$ is built, which represents the essence of what was learnt during the learning phase.

At this point the validation phase is carried out, aiming at verifying that the learning set consisting of the training frames is sufficiently representative of the watched scene in a normal situation.

The verification provides a simulation of an operating detection phase, wherein current images of the supervised area are replaced with at least one validation frame $F^{VAL}$, i.e. a learning image not belonging to the learning set, and therefore not used for building the normality matrix $Y_{i,j}$.

In practice, the validation is carried out by using at least one validation frame $F^{VAL}$ which is subdivided into a plurality of regions $R_{i,j}(F^{VAL})$ through the same grid already used for subdividing the training frames.

For each region $R_{i,j}(F^{VAL})$, a corresponding vector $IR_{i,j}(F^{VAL})$ is created as was previously done for the training frames.

Subsequently, the vector $IR_{i,j}(F^{VAL})$ is projected on a space of the learning images in order to determine the "distance" between the validation image and the normal situation synthesized in the matrix $Y_{i,j}^{r}$.

As known, given a matrix $Y_{i,j}^{r} = \left(y_1^{r}, y_2^{r} \ldots y_S^{r}\right)$ with elements in $\Re^m$, it is possible to define the space $Range(Y_{i,j}^{r})$, which is an underspace of $R^m$, consisting of all linear combinations of the columns $y_1^{r}, y_2^{r} \ldots y_S^{r}$. According to a known linear algebra theorem, the underspace $Range(Y_{i,j}^{r})$ coincides with the underspace $Range(U_{i,j}^{r})$, consisting of all linear combinations of the columns of $U_{i,j}^{r}$, i.e. of the first r principal components of $Y_{i,j}$.

The projection of an image portion $R_{i,j}$ of the frame $F^{VAL}$, i.e. of the vector $IR_{i,j} \in \Re^m$, on the principal components of $Y_{i,j}$ is therefore obtained by using the projector operator defmed as $P_{Range(Y_{i,j}^{r})}$

$$P_{Range(Y_{i,j}^{r})} = U_{i,j}^{r} \cdot (U_{i,j}^{r})^{T}$$

Once this operator has been calculated, for each image portion $R_{i,j}$ the projection $Proj(IR_{i,j})$ and the projection error $err\_Proj(IR_{i,j})$ are calculated as

$$\mathrm{Proj}\!\left(\mathrm{IR}_{i,j}\right) = U^r_{i,j} \cdot \left(U^r_{i,j}\right)^T \cdot \mathrm{IR}_{i,j}$$

$$\mathrm{err\_Proj}\!\left(\mathrm{IR}_{i,j}\right) = \left\|\mathrm{Proj}\!\left(\mathrm{IR}_{i,j}\right) - \mathrm{IR}_{i,j}\right\|_2$$

The watched scene will be signalled as anomalous (i.e. an event will be detected) if the projection error is greater than the respective threshold, i.e. if the following relationship is fulfilled:

$$\mathrm{err\_Proj}\!\left(\mathrm{IR}_{i,j}\right) \geq \mathrm{Thr}_{i,j}$$

According to a preferred embodiment, the threshold $\mathrm{Thr}_{i,j}$ is determined automatically and is set to the $r+1^{th}$ singular value $\sigma_{r+1}$ of the matrix $Y_{i,j}$, i.e. to the highest index singular value fulfilling the relationships

$$\sum_{i=1}^{r} \sigma_i \leq \%E \quad \text{and} \quad \sigma_1 \geq \sigma_2 \geq \dots \geq \sigma_r \geq \sigma_{r+1} \geq 0$$

Advantageously, the threshold can be set to $k\sigma_{r+1}$ with $k>1$ so as to take into account any background noise being present in the images.

Since the validation frames $F^{VAL}$ should represent the scene in a normal situation, no event should be detected even in the worst conditions. Otherwise, the set of acquired training frames is not representative of the scene in a normal situation; according to the method, it will be necessary in this case to select a different learning set and to rebuild the matrix $Y^r_{i,j}$.

For the purpose of preventing a good set of training frames from being discarded because a validation frame (not the training frames) is not actually representative of a normal situation, in a preferred and advantageous embodiment the method provides for simulating the event detection on a plurality of validation frames.

According to this embodiment of the method, the set of training frames will be changed if a number of events is detected which is greater that a preset percentage, e.g. 25%, calculated on the total number of measurements. For example, if the validation phase verifies 100 validation frames and detects 25 events, then the method will require the learning set to be rebuilt. According to a further advantageous embodiment, the normality matrix $Y_{i,j}$ will be regenerated by starting from a new learning set if the mean projection error $\overline{\mathrm{err\_Proj}}$ of a plurality of validation images is greater than or equal to the threshold $\mathrm{Thr}_{i,j}$.

The mean projection error err_Proj is calculated as

$$\overline{\mathrm{err\_Proj}} = \mathrm{media}\big[\mathrm{err\_Proj1}, \mathrm{err\_Proj2}, \mathrm{err\_Proj3}, \dots\big]$$

wherein "media" is a function which receives the projection errors err_Proj1, err_Proj2, err_Proj3... of the validation images and outputs the mean value thereof.

In another embodiment it is possible to calculate the maximum projection error $\overline{\mathrm{err\_Proj}}_{MAX}$ among the projection errors of a plurality of validation images. If said error is beyond a preset threshold, then the training phase will be repeated by rebuilding a new learning set.

In a preferred embodiment, the number of frames to be added depends on the difference between the mean projection error $\overline{\mathrm{err\_Proj}}$ and the threshold.

As an alternative, a predetermined number of frames may be added which is dependent on the memory available in the buffer.

Preferably, not all of the frames added to the learning set are consecutive.

The maximum size of the learning set may be defined (at installation or production time) as a function of the available memory and computing power.

During the learning phase, the method provides for storing a plurality of pieces of information which are useful for detecting an event. In particular, the following information is stored:

- the matrixes $U_{i,j}^r = \begin{bmatrix} u_1 \dots u_r \end{bmatrix}$
- the thresholds $Thr_{i,j}$
- the number r of principal components of each region $R_{i,j}$ which allows to optimize the matrix $Y_{i,j}$.

Once the learning phase is over, the video surveillance system can start the actual operating phase by acquiring current images of the supervised area in order to detect any events. Through the video camera 5, a current image of the supervised area is acquired, in particular a frame F* of the video signal generated by the video camera.

The frame F* is subdivided into a plurality of regions $R_{i,j}(F^*)$ by means of the same grid previously used during the learning phase.

For each region $R_{i,j}(F^*)$, a corresponding vector $IR_{i,j}(F^*)$ is created, which is then projected on the principal components of $Y_{i,j}$, i.e. on the space of the learning images, in order to evaluate the projection error

$$\mathrm{err\_Proj}\big(IR_{i,j}\big) = \big\|\mathrm{Proj}\big(IR_{i,j}\big) - IR_{i,j}\big\|_2 .$$

as described with reference to the validation phase.

Within each region Rij, an event will be detected if the projection error is greater than the threshold selected by the system for that same region $R_{i,j}$.

These steps use the information stored during the learning phase.

Fig. 4 illustrates an example of event detection. The analysed frame F* shows a corridor, which is the same corridor as that shown in Figs. 1 and 3, wherein two people are present whose silhouettes occupy a portion of the frame; in the example of Fig. 4, said silhouettes occupy seven regions $R_{i,j}$.

Only these regions $R_{i,j}$ (highlighted by a white contour) occupied by people will have an error which is greater than the accepted threshold, thus triggering an alarm.

Although the above-described algorithm provides for treating images as vectors, obviously the physical meaning of these operations should not be overlooked, such operations being also obtainable in different manners and through different steps.

Detecting an event by evaluating the projection error of the image vector on the vectorial space of the images Range($Y_{i,j}^r$) corresponds to comparing a current image $R_{i,j}(F^*)$ with an image corresponding to a linear combination of a plurality of reference images approximating, or coinciding with, respective learning images.

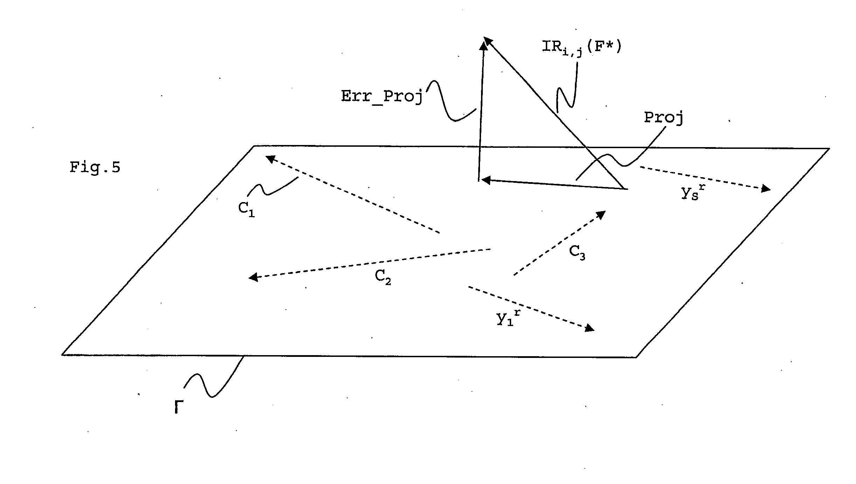

This concept will become clearer when looking at Fig. 5.

The space Range($Y_{i,j}^r$) is represented by the plane $\Gamma$ in which the reference images $y_1^r \dots y_S^r$ and all linear combinations $C_1, C_2, C_3 \dots$ of such reference images lay.

Projecting a current image $R_{i,j}(F^*)$ on the plane $\Gamma$ means comparing said image with the linear combination $C_i$ of the reference images which is closer to the image $R_{i,j}(F^*)$ in the sense of the L2 norm.

Rather than a pixel-by-pixel comparison, this is an image-by-image comparison; this means that, in addition to the values of the pixels of the image, the correlation thereof is also taken into account through the principal components analysis.

Of course this comparison, which according to the preferred and advantageous embodiment of the present invention is synthesized by the step of projecting the vector corresponding to the current image on the space of the images Range($Y_{i,j}^r$), may alternatively be obtained by comparing first the values of the single pixels and then the relationships among the pixels of a current image and of an image built during the learning phase and corresponding to a linear combination of images approximating, or coinciding with, images acquired in a normal situation.

The advantages of the present invention are apparent from the above description.

The proposed approach, based on a comparison between portions of the current image (i.e. groups of pixels) and respective models built during the learning phase, turns out to be more reliable than known solutions based on a comparison of each pixel, in that it allows to take also into account the spatial correlation among the pixels.

Furthermore, unlike known solutions using a statistic model in order to represent the normal situation of one pixel, the model according to the invention consists of a set of vectorial spaces, each pertaining to one region of the image, obtained from a learning phase.

As a result, therefore, the model according to the invention allows to represent normality in a much more accurate manner than the solutions known in the art, since it uses images rather than statistical parameters such as average and variance.

Also, PCA is an information compression method which allows to rebuild the original data (this not being possible with the statistic methods used by existing solutions), thus not endangering the quality with which normality is described and the resulting detection reliability.

The proposed approach also offers a high degree of automation, unlike traditional approaches which require arbitrary choices when programming and setting up the system.

In particular, the detection threshold is calculated automatically based on the learning data. Moreover, the proposed approach selects the length of the learning buffer autonomously depending on the dynamics being present in the watched scene during the learning phase. In particular, the algorithm chooses a compromise solution between available memory and scene dynamics.

Furthermore, the minimum number of principal components used for representing the vectorial space also changes as a function of the scene dynamics and is also calculated by the algorithm.

It is also clear that the above description presents a video surveillance system and an event detection method according to preferred embodiments which represent non-limiting examples of realization of the system and of implementation of the method.

In particular, the selection of the optimum number of components $r_{i,j}$, which allows to reduce the informative content of the matrix $Y_{i,j}$, can be carried out in several different manners.

For example, the $r_{i,j}$ principal components may be chosen by picking up those associated with a singular value being greater than a percentage (preferably in the range of 1-4%, more preferably 2%) of the greatest singular value ($\sigma_1$) of the matrix $Y_{i,j}$.

For example, if the matrix $Y_{i,j}$ has the following singular values: $\sigma_1$=100, $\sigma_2$=20, $\sigma_3$=10, $\sigma_4$=1, $\sigma_5$=0,5, $\sigma_6$=0,3 ..., by accepting singular values greater than 2% of $\sigma_1$ only the first three principal components $u_1$, $u_2$, $u_3$ will be taken into consideration.

Furthermore, the projection error, which in the preferred embodiment is calculated as err_Proj($IR_{i,j}$)=$\|$Proj($IR_{i,j}$)-$IR_{i,j}\|_2$ , may without distinction be calculated as any Lp norm:

$$\mathrm{err\_Proj}\big(IR_{i,j}\big) = \big\|\mathrm{Proj}\big(IR_{i,j}\big) - IR_{i,j}\big\|_{Lp}$$

## Claims

1. Event detection method for video surveillance systems (1), comprising a learning phase, wherein learning images of a supervised area are acquired at different times in the absence of any detectable events, and an operating detection phase, wherein current images of said area are acquired, wherein an event is detected by comparing a current image with an image corresponding to a linear combination of a plurality of reference images approximating, or coinciding with, respective learning images, **characterized in that** said learning phase comprises
a training phase adapted to select a learning set consisting of said respective learning images, and
a validation phase comprising at least one simulation step for simulating said operating phase, said simulation step being carried out by comparing a validation image with a linear combination of said reference images, said validation image being a learning image not belonging to said learning set,
wherein said validation phase comprises the steps of:

   - projecting a plurality of image vectors, corresponding to a plurality of validation images, on the vectorial space defined by all of the linear combinations of said reference images as a whole,
   - for each projection, detecting a projection error defined as the norm of the difference between an image vector and the vector corresponding to the projection of the image vector on said vectorial space.
   - determining the maximum projection error err_Proj$_{MAX}$ of all projections of said plurality of image vectors,
   - repeating the training phase by changing the learning set, if the maximum projection error err_Proj$_{MAX}$ is greater than or equal to a certain threshold.

2. Method according to claim 1, **characterized in that** said reference images are obtained by using a method for analysing the principal components of a learning set consisting of a plurality of learning images.

3. Method according to claim 2, wherein said learning set is organised in a normality matrix, the columns of which contain the pixels of said learning images, and said reference images are the columns of a matrix ($Y_{i,j}{}^r$) approximating said normality matrix ($Y_{i,j}$).

4. Method according to claim 3, **characterized in that** said method of principal components analysis comprises a step of decomposing said normality matrix into singular values, this decomposition providing three matrixes

$$U_{i,j} = [u_1 \ldots u_S],$$

$$\Sigma_{i,j} = \mathrm{diag}(\sigma_1, \ldots, \sigma_S),$$

and

$$V_{i,j} = [v_1 \ldots v_S],$$

such that the normality matrix $Y_{i,j}$ can be written as:

$$Y_{i,j} = U_{i,j} \cdot \Sigma_{i,j} \cdot V_{i,j}^T$$

5. Method according to claim 4, wherein said matrix approximating said normality matrix is

$$Y_{i,j}^r = U_{i,j}^r \cdot \Sigma_{i,j}^r \cdot \left(V_{i,j}^r\right)^T$$

wherein

$$U_{i,j}^r = [u_1 \ldots u_r]$$

$$\Sigma_{i,j}^r = \mathrm{diag}(\sigma_1 \ldots \sigma_r)$$

$$V_{i,j}^r = [v_1 \ldots v_r]$$

the number r of columns of the matrixes $U_{i,j}^r$, $\Sigma_{i,j}^r$, $V_{i,j}^r$ being smaller than the number S of the columns of the matrixes $U_{i,j}$, $\Sigma_{i,j}$, $V_{i,j}$.

6. Method according to any of claims 3 to 5, wherein said matrix approximating the normality matrix is such that the sum of its singular values is smaller than a preset percentage, preferably 75%, of the sum of the singular values of the normality matrix.

7. Method according to any of claims 3 to 5, wherein the singular values of said matrix approximating the normality matrix are greater than a preset percentage, preferably between 2% and 4%, of the greatest singular value of said normality matrix.

8. Method according to any of the preceding claims, **characterized in that** said comparison comprises the step of projecting an image vector, corresponding to said current image, on the vectorial space defined by all of the linear combinations of the reference images as a whole.

9. Method according to claim 8, **characterized in that** an event will be detected if the following relationship is fulfilled:

$$\text{err\_Proj(IR)} \geq \text{Thr}$$

wherein Thr is a threshold and err_Proj(IR) is a projection error calculated as the norm of the difference between the vectors IR and Proj(IR), IR being said image vector and Proj(IR) being the vector corresponding to the projection of IR on said vectorial space.

10. Method according to claim 9 when claim 8 is dependent on any of claims 2 to 7, wherein said normality matrix and said approximating matrix have a plurality of singular values in common, **characterized in that** said selected threshold is equal to the greatest non-common singular value.

11. Method according to claim 9 when claim 8 is dependent on any of claims 2 to 7, wherein said normality matrix and said approximating matrix have a plurality of singular values in common, **characterized in that** said selected threshold is equal to the greatest non-common singular value multiplied by a preset real number greater than one.

12. Method according to claim 10, **characterized in that** said selected threshold is equal to a preset percentage between 2% and 4% of the greatest singular value of said normality matrix.

13. Method according to claim 1, **characterized in that** the training phase will be repeated by changing the learning set if said validation phase detects an event.

14. Method according to claim 1 , **characterized in that** the training phase will be repeated by changing the learning set, if said validation phase detects a percentage of events which is greater than a preset threshold.

15. Method according to any of the preceding claims, **characterized in that** image processing steps are carried out during both the learning phase and the event detection phase.

16. Method according to claim 15, wherein said image processing steps comprise a step for reducing said images to greyscale.

17. Method according to claim 15 or 16, wherein said image processing steps comprise a low-pass filtering step preferably using a Gaussian kernel.

18. Method according to any of the preceding claims, wherein said learning images and said current images are groups of pixels obtained by subdividing frames or half-frames of a video signal by means of a predefined grid.

19. Computer product which can be loaded in a memory area of an electronic computer and which comprises code portions adapted to implement the method according to any of claims 1 to 18 when executed by said computer.

20. Video surveillance system (1) comprising at least one image acquisition unit (5) connected to an image processing unit (4), said image processing unit (4) being adapted to implement the method according to any of claims 1 to 18.

**Patentansprüche**

1. Verfahren zur Ereignisdetektion für Videoüberwachungssysteme (1), umfassend eine Lernphase, in der Lernbilder eines überwachten Bereiches an verschiedenen Zeiten in Abwesenheit jeglicher detektierbarer Ereignisse erfasst werden, und eine Betriebsdetektionsphase, in der aktuelle Bilder des Bereiches erfasst werden, wobei ein Ereignis detektiert wird durch Vergleichen eines aktuellen Bildes mit einem Bild, das mit einer Linearkombination eine Mehrzahl von Referenzbildern annähernd korrespondiert, oder übereinstimmt mit entsprechenden Lernbildern, **dadurch gekennzeichnet, dass** die Lernphase umfasst
eine Trainingsphase, angepasst zum Auswählen einer Lernreihe, die aus den entsprechenden Lernbildern besteht, und

eine Validierungsphase, die mindestens einen Simulationsschritt zum Simulieren der Betriebsphase umfasst, wobei der Simulationsschritt durch Vergleichen eines Validierungsbildes mit einer Linearkombination der entsprechenden Bilder ausgeführt wird, wobei das Validierungsbild ein Lernbild ist, das nicht zu einer Lernreihe gehört, wobei die Validierungsphase die Schritte umfasst:

- Projizieren einer Mehrzahl von Bildvektoren, die mit einer Mehrzahl von Validierungsbildern korrespondieren, auf dem vektoriellen Raum, der durch alle der Linearkombinationen der Referenzbilder als Ganzes definiert ist,
- für jede Projektion, erfassen eines Projektionsfehlers, der definiert ist als die Norm des Unterschiedes zwischen einem Bildvektor und dem Vektor, der mit der Projektion des Bildvektors auf dem vektoriellen Raum korrespondiert,
- Bestimmen des Maximal-Projektionsfehlers $\overline{\text{err\_Proj}}_{MAX}$ von allen Projektionen der Mehrzahl von Bildvektoren,
- Wiederholen der Trainingsphase durch Wechseln der Lernreihe, wenn der maximale Projektionsfehler $\overline{\text{err\_Proj}}_{MAX}$ größer oder gleich einem bestimmten Schwellwert ist.

2. Verfahren nach Anspruch 1, **dadurch gekennzeichnet, dass** die Referenzbilder durch Verwendung eines Verfahrens zum Analysieren der Hauptkomponenten einer Lernreihe, die aus einer Mehrzahl von Lernbildern besteht, erhalten werden.

3. Verfahren nach Anspruch 2, wobei die Lernreihe als eine Normal-Matrix aufgebaut ist, deren Spalten die Pixel der Lernbilder beinhalten, und die Referenzbilder sind die Spalten einer Matrix $(Y_{ij}^{r})$, die sich der Normal-Matrix $(Y_{ij})$ annähert.

4. Verfahren nach Anspruch 3, **dadurch gekennzeichnet, dass** das Verfahren der Hauptkomponentenanalyse einen Schritt zur Zerlegung der Normal-Matrix in Singulär-Werten aufweist, diese Zerlegung stellt drei Matrizen bereit

$$U_{ij} = [u_1 \dots u_s],$$

$$\textstyle\sum_{ij} = \text{diag}(\sigma_1, \dots, \sigma_s),$$

und

$$V_{ij} = [v_1 \dots v_s],$$

so dass die Normal-Matrix $Y_{ij}$ geschrieben werden kann als:

$$Y_{i,j} = U_{i,j} \cdot \textstyle\sum_{i,j} \cdot V_{i,j}^{T}$$

5. Verfahren nach Anspruch 4, wobei die Matrix, die sich der Normal-Matrix annähert, ist

$$Y_{i,j}^{r} = U_{i,j}^{r} \cdot \textstyle\sum_{i,j}^{r} \cdot \left(V_{i,j}^{r}\right)^{T}$$

wobei

$$U_{i,j}^{r} = [u_1 \dots u_r]$$

$$\sum_{i,j}^{r} = \text{diag}(\sigma_1 \dots \sigma_r)$$

$$V_{i,j}^{r} = [v_1 \dots v_r]$$

die Anzahl r der Spalten der Matrizen $U_{i,j}^{r}$, $\sum_{i,j}^{r}$, $V_{i,j}^{r}$ kleiner ist als die Anzahl S der Spalten der Matrizen $U_{i,j}$, $\Sigma_{i,j}$, $V_{i,j}$.

6. Verfahren nach einem der Ansprüche 3 bis 5, wobei die Matrix, die sich der Normal-Matrix annähert, derart ist, dass die Summe ihrer Singulär-Werte kleiner als ein voreingestellter Prozentsatz ist, vorzugsweise 75%, von der Summe der Singulär-Werte der Normal-Matrix.

7. Verfahren nach einem der Ansprüche 3 bis 5, wobei die Singulär-Werte der Matrix, die sich der Normal-Matrix annähert, größer sind als ein voreingestellter Prozentsatz, vorzugsweise zwischen 2% und 4% des größten Singulär-Wertes der Normal-Matrix.

8. Verfahren nach einem der vorhergehenden Ansprüche, **dadurch gekennzeichnet, dass** der Vergleich den Schritt einer Projektion eines Bildvektors beinhaltet, die mit dem aktuellen Bild korrespondiert, auf den Vektorraum, der durch alle der Linearkombinationen der Referenzbilder als Ganzes definiert ist.

9. Verfahren nach Anspruch 8, **dadurch gekennzeichnet, dass** ein Ereignis detektiert wird, wenn die folgende Beziehung erfüllt ist:

$$\text{err\_Proj(IR)} \geq \text{Thr}$$

wobei Thr ein Schwellwert ist und err_Proj(IR) ein Projektionsfehler ist, der als die Norm des Unterschieds zwischen den Vektoren IR und Proj(IR) berechnet wird, IR ist der Bildvektor und Proj(IR) ist der Vektor, der mit der Projektion von IR auf dem Vektorraum korrespondiert.

10. Verfahren nach Anspruch 9, während Anspruch 8 abhängig von einem der Ansprüche 2 bis 7 ist, wobei die Normal-Matrix und die Näherungsmatrix eine Mehrzahl von Singulär-Werten gemeinsam haben, **dadurch gekennzeichnet, dass** der ausgewählte Schwellwert mit dem größten nicht gemeinsamen Singulär-Wert gleich ist.

11. Verfahren nach Anspruch 9, während Anspruch 8 abhängig von einem der Ansprüche 2 bis 7 ist, wobei die Normal-Matrix und die Näherungsmatrix eine Mehrzahl von Singulär-Werten gemeinsam haben, **dadurch gekennzeichnet, dass** der ausgewählte Schwellwert mit dem größten nicht gemeinsamen Singulär-Wert multipliziert mit einer voreingestellten Realzahl, die größer als 1 ist, gleich ist.

12. Verfahren nach Anspruch 10, **dadurch gekennzeichnet, dass** der ausgewählte Schwellwert zu einem voreingestellten Prozentsatz zwischen 2% und 4% des größten Singulär-Wertes der Normal-Matrix gleich ist.

13. Verfahren nach Anspruch 1, **dadurch gekennzeichnet, dass** die Trainingsphase beim Wechseln der Lernreihe wiederholt wird, wenn die Validierungsphase ein Ereignis detektiert.

14. Verfahren nach Anspruch 1, **dadurch gekennzeichnet, dass** die Trainingsphase beim Wechseln der Lernreihe wiederholt wird, wenn die Validierungsphase einen Prozentsatz von Ereignissen detektiert, welcher größer als ein voreingestellter Schwellwert ist.

15. Verfahren nach einem der vorhergehenden Ansprüche, **dadurch gekennzeichnet, dass** die Bildverarbeitungsschritte während beider Phasen, die Lernphase und die Ereignisdetektionsphase, ausgeführt werden.

16. Verfahren nach Anspruch 15, wobei die Bildverarbeitungsschritte einen Schritt zum Reduzieren der Bilder in Graustufen beinhalten.

**17.** Verfahren nach Anspruch 15 oder 16, wobei die Bildverarbeitungsschritte einen Tiefpassfilterungsschritt, der vorzugsweise einen Gausskern benutzt, beinhalten.

**18.** Verfahren nach einem der vorhergehenden Ansprüche, wobei die Lernbilder und die aktuellen Bilder Gruppen von Pixeln sind, die durch Unterteilung von Frames oder halbe Frames eines Videosignals mittels eines vordefinierten Rasters erhalten werden.

**19.** Computer-Produkt, welches in einem Speicherbereich eines elektronischen Computers geladen werden kann und welches Teile des Codes beinhaltet, die zum Implementieren der Verfahren nach einem der Ansprüche 1 bis 18 angepasst sind, wenn diese von dem Computer ausgeführt werden.

**20.** Videoüberwachungssystem (1), umfassend mindestens eine Bilderfassungseinheit (5), die mit einer Bildverarbeitungseinheit (4) verbunden ist, wobei die Bildverarbeitungseinheit (4) zum Implementieren der Verfahren nach einem der Ansprüche 1 bis 18 angepasst ist.

## Revendications

**1.** Procédé de détection d'événements destiné à des systèmes de vidéo surveillance (1), comportant une phase d'apprentissage, dans laquelle des images d'apprentissage d'une zone surveillée sont acquises à des moments différents en l'absence de quelconques événements détectables, et une phase de détection opérationnelle, dans laquelle les images en cours de ladite zone sont acquises, dans lequel un événement est détecté en comparant une image en cours avec une image correspondant à une combinaison linéaire d'une pluralité d'images de référence s'approchant, ou coïncidant avec, des images d'apprentissage respectives, **caractérisé en ce que** ladite phase d'apprentissage comprend
une phase de test adaptée pour sélectionner un ensemble d'apprentissage constitué desdites images d'apprentissage respectives, et
une phase de validation comprenant au moins une étape de simulation pour simuler ladite phase opérationnelle, ladite étape de simulation étant réalisée par comparaison d'une image de validation avec une combinaison linéaire desdites images de référence, ladite image de validation étant une image d'apprentissage n'appartenant pas audit ensemble d'apprentissage,
dans lequel ladite phase de validation comprend les étapes comportant le fait de :

- projeter une pluralité de vecteurs images, correspondant à une pluralité d'images de validation, sur l'espace vectoriel défini par l'ensemble des combinaisons linéaires desdites images de référence mises en totalité,
- pour chaque projection, détecter une erreur de projection définie comme la norme de la différence entre un vecteur image et le vecteur correspondant à la projection du vecteur image sur ledit espace vectoriel,
- déterminer l'erreur de projection maximale $\overline{err\_Proj}_{MAX}$ de l'ensemble des projections de ladite pluralité de vecteurs images,
- répéter la phase de test en modifiant l'ensemble d'apprentissage, si l'erreur de projection maximale $\overline{err\_Proj}_{MAX}$ est supérieure ou égale à un certain seuil.

**2.** Procédé selon la revendication 1, **caractérisé en ce que** lesdites images de référence sont obtenues en utilisant un procédé permettant d'analyser les composantes principales d'un ensemble d'apprentissage constitué d'une pluralité d'images d'apprentissage.

**3.** Procédé selon la revendication 2, dans lequel ledit ensemble d'apprentissage est organisé dans une matrice de normalité dont les colonnes contiennent les pixels desdites images d'apprentissage, et dans lequel lesdites images de référence sont les colonnes d'une matrice ($Y'_{i'j}$) s'approchant de ladite matrice de normalité ($Y_{ij}$).

**4.** Procédé selon la revendication 3, **caractérisé en ce que** ledit procédé d'analyse des composantes principales comporte une étape de décomposition de ladite matrice de normalité en valeurs singulières, cette décomposition fournissant trois matrices

$$U_{ij} \quad = \quad [u_1 \; \ldots \; u_s],$$

$$\Sigma_{ij} \quad = \quad \mathrm{diag}(\sigma_1 \ldots \; \sigma_s),$$

et

$$Vij \quad = \quad [v_1 \; \ldots \; v_s],$$

de telle sorte que la matrice de normalité $Y_{ij}$ peut être écrite sous la forme :

$$Y_{i,j} \quad = \quad U_{i,j} \; \cdot \; \Sigma_{i,j} \; \cdot \; V_{i,j}^{T}$$

**5.** Procédé selon la revendication 4, dans lequel ladite matrice s'approchant de ladite matrice de normalité est

$$Y_{i,j}^{r} = U_{i,j}^{r} \; \cdot \Sigma_{i,j}^{r} \; \cdot \; (V_{i,j}^{r})^{\;T}$$

dans laquelle

$$U_{i,j}^{r} \; = \; [u_1 \; \ldots \; u_r]$$

$$\Sigma_{i,j}^{r} \; = \; \mathrm{diag}(\sigma_1 \; \ldots \; \sigma_r)$$

$$V_{i,j}^{r} \; = \; [v_1 \; \ldots \; v_r]$$

le nombre r de colonnes des matrices $U_{i,j}^{r}$, $\Sigma_{i,j}^{r}$, $V_{i,j}^{r}$ étant plus petit que le nombre S des colonnes des matrices $U_{i,j}$, $\Sigma_{i,j}$, $V_{i,j}$.

**6.** Procédé selon l'une quelconque des revendications 3 à 5 dans lequel ladite matrice s'approchant de la matrice de normalité est telle que la somme de ses valeurs singulières est plus petite qu'un pourcentage préétabli, de préférence 75%, de la somme des valeurs singulières de ladite matrice de normalité.

**7.** Procédé selon l'une quelconque des revendications 3 à 5, dans lequel les valeurs singulières de ladite matrice s'approchant de la matrice de normalité sont plus grandes qu'un pourcentage préétabli, de préférence compris entre 2% et 4%, de la valeur singulière la plus grande de ladite matrice de normalité.

**8.** Procédé selon l'une quelconque des revendications précédente, **caractérisé en ce que** ladite comparaison comprend l'étape de projection d'un vecteur image, correspondant à ladite image en cours, sur l'espace vectoriel défini par l'ensemble des combinaisons linéaires des images de référence prises en totalité.

**9.** Procédé selon la revendication 8, **caractérisé en ce qu'**un événement sera détecté si la relation suivante est satisfaite :

$$err\_Proj(IR) \geq Thr$$

dans laquelle Thr est un seuil et err_Proj(IR) est une erreur de projection calculée comme étant la norme de la différence entre les vecteurs IR et Proj(IR), IR étant ledit vecteur image et Proj(IR) étant le vecteur correspondant à la projection de IR sur ledit espace vectoriel.

**10.** Procédé selon la revendication 9 lorsque la revendication 8 est dépendante de l'une quelconque des revendications 2 à 7, dans lequel ladite matrice de normalité et ladite matrice d'approximation comportent une pluralité de valeurs singulières en commun, **caractérisé en ce que** ledit seuil sélectionné est égal à la valeur singulière non commune la plus grande.

**11.** Procédé selon la revendication 9 lorsque la revendication 8 est dépendante de l'une quelconque des revendications 2 à 7, dans lequel ladite matrice de normalité et ladite matrice d'approximation ont en commun une pluralité de valeurs singulières, **caractérisé en ce que** ledit seuil sélectionné est égal à la valeur singulière non commune la plus grande multipliée par un nombre réel préétabli supérieur à un.

**12.** Procédé selon la revendication 10, **caractérisé en ce que** ledit seuil sélectionné est égal à un pourcentage préétabli compris entre 2% et 4% de la valeur singulière la plus grande de ladite matrice de normalité.

**13.** Procédé selon la revendication 1, **caractérisé en ce que** la phase de test sera répétée en modifiant l'ensemble d'apprentissage si ladite phase de validation détecte un événement.

**14.** Procédé selon la revendication 1, **caractérisé en ce que** la phase de test sera répétée en modifiant l'ensemble d'apprentissage si ladite phase de validation détecte un pourcentage d'événements qui est plus grand qu'un seuil préétabli.

**15.** Procédé selon l'une quelconque des revendications précédentes, **caractérisé en ce que** les étapes de traitement d'image sont réalisées à la fois pendant la phase d'apprentissage et pendant la phase de détection d'événement.

**16.** Procédé selon la revendication 15, dans lequel lesdites étapes de traitement d'images comprennent une étape permettant de réduire lesdites images à l'échelle des gris.

**17.** Procédé selon la revendication 15 ou 16, dans lequel lesdites étapes de traitement d'images comprennent une étape de filtrage passe-bas utilisant, de préférence, un noyau de Gauss.

**18.** Procédé selon l'une quelconque des revendications précédentes, dans lequel lesdites images d'apprentissage et lesdites images en cours sont des groupes de pixels obtenus en subdivisant des trames ou des demi-trames d'un signal vidéo au moyen d'une grille prédéfinie.

**19.** Produit informatique qui peut être chargé dans une zone de mémoire d'un ordinateur électronique et qui comporte des parties de code adaptées pour mettre en oeuvre le procédé selon l'une quelconque des revendications 1 à 18 lorsqu'il est exécuté par ledit ordinateur.

**20.** Système de vidéo surveillance (1) comportant au moins une unité d'acquisition d'images (5) connectée à une unité de traitement d'images (4), ladite unité de traitement d'images (4) étant adaptée pou mettre en oeuvre le procédé selon l'une quelconque des revendications 1 à 18.

Fig.1

Fig.2b

Fig.2a

$R_{1,1}(F)$

$R_{2,6}(F)$

$R_{4,3}(F)$

Fig. 3

Fig. 4

EP 1 908 016 B1

Fig.5

$IR_{i,j}(F*)$

Err_Proj

Proj

$y_s{}^r$

$C_1$

$C_3$

$C_2$

$y_1{}^r$

$\Gamma$

EP 1 908 016 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5892856 A
- US 20040246336 A

- EP 1542154 A

### Non-patent literature cited in the description

- Face Recognition Using Neighbourhood Preserving Projections. **YANWEI PANG et al.** ADVANCES IN MULTIMEDIA INFORMATION PROCESSING - PCM 2005 LECTURE NOTES IN COMPUTER SCIENCE. LNCS, SPRINGER-VERLANG, 2005, vol. 3768

- **HUAZHONG NING et al.** Silhouette analysis-based gait recognition for human identification. *IEEE TRANSACTIONS ON PATTERN ANALYSYS AND MACHINE INTELLIGENCE,* December 2003, vol. 25 (12), 1505-1518
- Locally Linear Models on Face Appearance Manifolds with Application to Dual-Subspace Based Classification. *IEEE COMPUTER SOCIETY CONFERENCE ON COMPUTER VISION AND PATTERN RECOGNITION,* 17 June 2006, 1384-1390